# FASCICULE DE BREVET EUROPEEN

(11) **EP 1 402 211 B1**
(45) Date de publication et mention de la délivrance du brevet: **01.08.2007**
(21) Numéro de dépôt: 02748962.4
(22) Date de dépôt: 19.06.2002
(51) Int. Cl.: F16L 11/127

(54) **PAROI FLEXIBLE POUR CONTENIR UN FLUIDE SOUS PRESSION ET SON UTILISATION**
FLEXIBLE WAND, DIE EIN FLUID UNTER DRUCK ENTHÄLT, UND IHRE VERWENDUNG
FLEXIBLE WALL FOR CONTAINING A FLUID UNDER PRESSURE, PIPE COMPRISING SAME, AND USE THEREOF

(30) Priorité: 21.06.2001 FR 0108304
(43) Date de publication de la demande: 31.03.2004
(73) Titulaire: ROBERT BOSCH GMBH, 70442 Stuttgart (DE)
(72) Inventeur: PASQUET, Thierry, F-93190 Livry-Gargan (FR)
(74) Mandataire: Hurwic, Aleksander Wiktor
(86) Numéro de dépôt international: PCT/FR2002/002115
(87) Numéro de publication internationale: WO 2003/004916

(56) Documents cités:
- US-A- 5 360 037
- US-A- 5 676 659
- US-A- 6 158 477

## Description

L'invention est relative à une paroi flexible pour contenir un fluide sous pression dans un volume, cette paroi comprenant au moins une couche intermédiaire pour assurer une résistance mécanique, et deux couches de surface situées de part et d'autre de la couche intermédiaire pour assurer l'étanchéité.

L'invention concerne, plus particulièrement, mais non exclusivement, une paroi flexible pour contenir un liquide sous pression dans un système de freinage pour véhicule automobile.

Lorsqu'un fluide, en particulier un liquide sous pression , est emprisonné dans un contenant, la paroi limitant ce contenant est soumise à des déformations dues à la pression du fluide. Ces déformations entraînent des variations du volume intérieur du contenant.

Pour certaines applications, il est souhaitable de limiter ou de contrôler de telles variations volumiques. Par exemple, dans un système de freinage hydraulique la déformation volumique des canalisations due à la pression entraîne un phénomène d'absorption de liquide et une commande moins efficace du freinage.

Il est souhaitable, en outre, de pouvoir estimer la valeur de la pression interne à partir de la déformation de la paroi.

L'invention a pour but, surtout, de fournir une paroi composée de plusieurs couches qui, tout en résistant mieux à la pression, permet d'agir à l'encontre de cette déformation.

Selon l'invention, une paroi flexible pour contenir un fluide sous pression, notamment pour un système de freinage pour véhicule automobile, comprenant au moins une couche intermédiaire assurant une résistance mécanique, et deux couches d'étanchéité situées de part et d'autre de la couche intermédiaire, est caractérisée par le fait qu'elle comporte une nappe intermédiaire de fils en matière à mémoire de forme disposés et orientés de manière que leur contraction, lorsque la température s'élève, s'oppose à la déformation mécanique de la paroi sous l'effet d'une pression.

De préférence, la nappe intermédiaire de fils en matière à mémoire de forme est constituée par une tresse.

Des raccords électriques sont avantageusement prévus sur des bords opposés de la tresse pour permettre d'y faire circuler un courant électrique en vue d'assurer son échauffement.

L'invention concerne également un tuyau flexible, en particulier pour circuit hydraulique, dont la paroi est telle que définie précédemment.

La nappe intermédiaire de fils en matière à mémoire de forme comporte des fils inclinés par rapport aux génératrices du tuyau afin de présenter une composante suivant la direction circonférentielle. Cette nappe intermédiaire est avantageusement constituée par une tresse.

De préférence, le tuyau comporte une couche externe et une couche interne en matière élastomère, notamment en caoutchouc, assurant l'étanchéité. La nappe de fils en matière à mémoire de forme peut être comprise entre deux couches assurant une résistance mécanique, en particulier formées par des tresses en fil de Nylon

Un tronçon de tuyau peut être muni à chaque extrémité d'un raccord hydraulique et d'un raccord électrique en liaison électrique avec l'extrémité correspondante de la tresse en matériau à mémoire de forme.

Avantageusement, l'intensité du courant électrique traversant la tresse à mémoire de forme est réglée et contrôlée selon la loi d'absorption souhaitée pour le tuyau.

Un distributeur de gouttes calibrées peut être réalisé avec un tel tuyau. Le distributeur comprend un réservoir de liquide sous pression disposé au-dessus d'un tronçon de tuyau dont la tresse en matériau à mémoire de forme est reliée, à chacune de ses extrémités, à une borne d'une source de tension électrique; l'extrémité inférieure du tronçon de tuyau est reliée à une buse de distribution des gouttes. Le réglage de l'intensité du courant traversant la tresse permet d'agir sur le calibre des gouttes distribuées.

Un accumulateur hydraulique peut être délimité par une paroi flexible selon l'invention, dont les déformations sont contrôlées par l'intensité du courant électrique traversant la couche en matériau à mémoire de forme.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

Sur ces dessins :
Fig. 1 est une coupe axiale d'un tronçon de tuyau selon l'invention.
Fig.2 est une vue en perspective d'une extrémité du tuyau dont les différentes couches sont dénudées.
Fig.3 est une coupe schématique de l'extrémité d'un tuyau muni d'un raccord hydraulique et électrique.
Fig.4 est une vue schématique en perspective de l'extrémité du tuyau de Fig.3, munie du raccord hydraulique et électrique.
Fig.5 est une vue schématique en coupe de la réalisation de la connexion électrique.
Fig.6 est un diagramme illustrant les variations ΔV d'un volume fermé par une paroi selon l'invention; les valeurs du volume sont portées en ordonnée, la pression étant portée en abscisse du côté droit, et l'intensité du courant électrique traversant la tresse étant portée à gauche.
Fig.7 est un schéma d'un distributeur de gouttes calibrées.
Fig. 8, enfin, est un schéma en coupe d'un accumulateur hydraulique limité par une paroi selon l'invention.

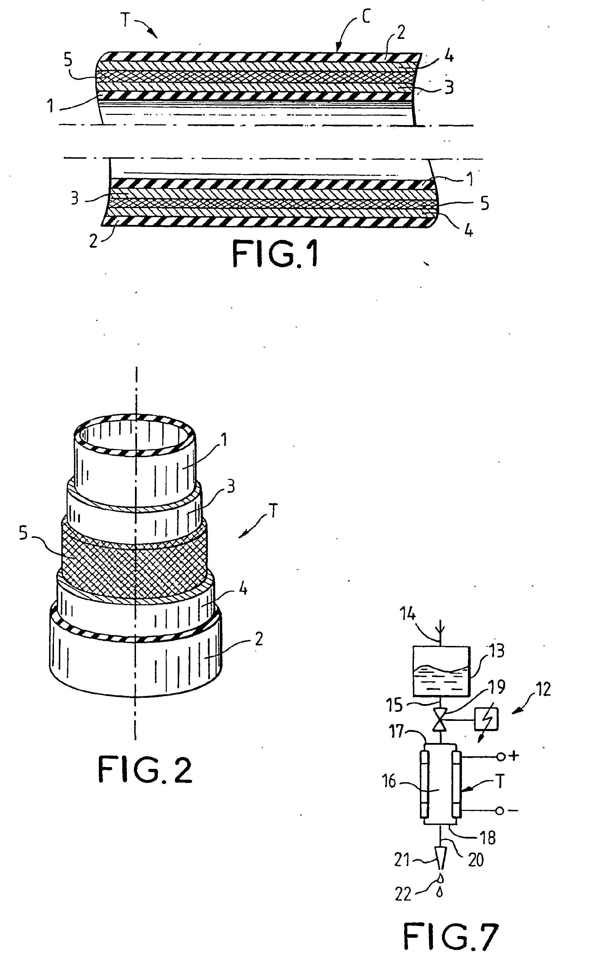

En se reportant aux dessins, notamment à Fig.1, on peut voir un tuyau flexible T, destiné à conduire un fluide sous pression, en particulier un liquide de frein pour véhicule automobile, dont la paroi C est composée de plusieurs couches. Les épaisseurs des différentes couches sur les dessins ont été augmentées pour une lecture plus facile, et ne correspondent pas à la réalité.

Une couche interne 1 assure l'étanchéité vis-à-vis du fluide circulant à l'intérieur du tuyau T et la protection des autres couches contre ce fluide. La couche 1 est réalisée, par exemple, en matière élastomère, notamment en caoutchouc. Une couche externe 2 assure également étanchéité et protection des couches internes. Cette couche externe 2 peut également être réalisée en matière élastomère, notamment en caoutchouc.

Autour de la couche interne 1 est prévue une couche 3 assurant une résistance mécanique à l'encontre de la pression du fluide circulant dans le tuyau T. Cette couche 3 peut être formée par une tresse d'un fil en une matière présentant une bonne résistance mécanique, par exemple une tresse en fil de Nylon ou autre matière équivalente. De préférence une couche 4, semblable à la couche 3, est prévue contre la couche externe 2, à l'intérieur de celle-ci. La couche 4 peut aussi être formée par une tresse d'un fil en matière résistante mécaniquement, notamment une tresse de fil de Nylon.

Entre les couches 3 et 4 est disposée une nappe intermédiaire 5 de fils en matière à mémoire de forme orientés et disposés de manière à s'opposer à une déformation mécanique de la paroi C sous l'effet d'une pression, par leur contraction lorsque la température s'élève.

Comme exemple de matériau à mémoire de forme on peut citer les alliages Ni - Ti, cet exemple n'étant pas limitatif.

On rappelle qu'un fil en matériau à mémoire de forme a tendance à se contracter lorsque sa température s'élève, notamment lorsqu'il est traversé par un courant électrique et qu'il s'échauffe par effet Joule. Il retrouve son état initial en revenant à sa température de départ.

Pour exploiter cet effet de contraction, et lutter contre la déformation, essentiellement le gonflement du tuyau T sous l'effet de la pression, il convient que la nappe 5 comporte des fils inclinés par rapport aux génératrices du tuyau afin de présenter une composante suivant la direction circonférentielle, c'est-à-dire dans un plan perpendiculaire à l'axe du tuyau. De préférence la nappe 5 est réalisée sous forme de tresse de fils à mémoire de forme de sorte que la condition énoncée précédemment soit satisfaite.

Le tuyau T permet, dans le cas où il conduit un liquide chaud, une auto-adaptation du débit du liquide en fonction de la température. En effet, si le débit du liquide chaud a tendance à augmenter, la tresse 5 de fils en matière à mémoire de forme a tendance à se contracter et à réduire le diamètre intérieur du tuyau, donc à réduire le débit. Par contre, si le débit de liquide chaud à l'intérieur du tuyau a tendance à diminuer, la tresse 5 a tendance à se refroidir et donc à se dilater, avec réduction de la perte de charge et augmentation du débit.

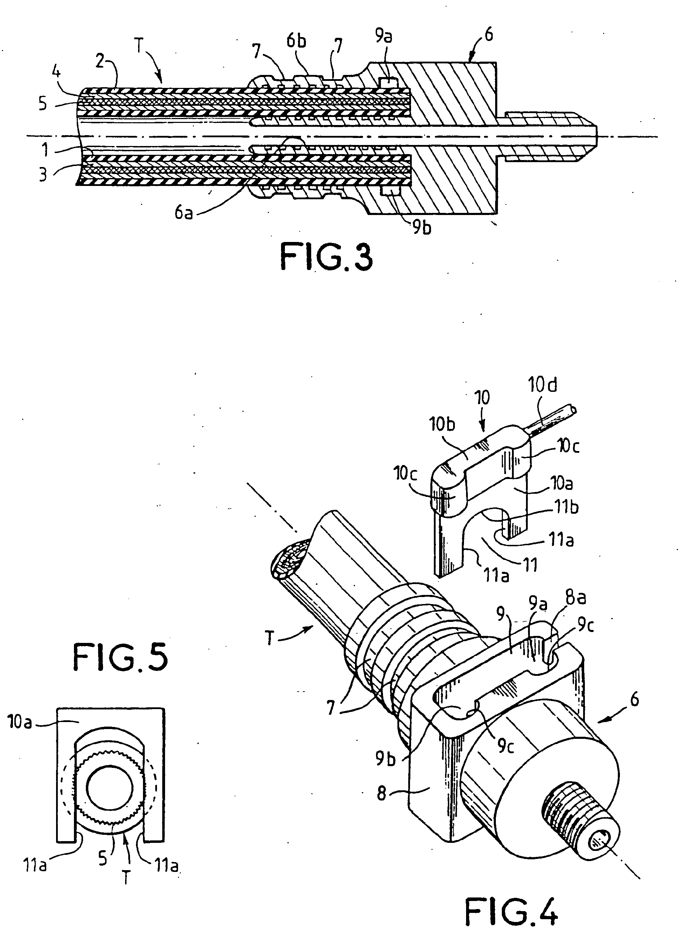

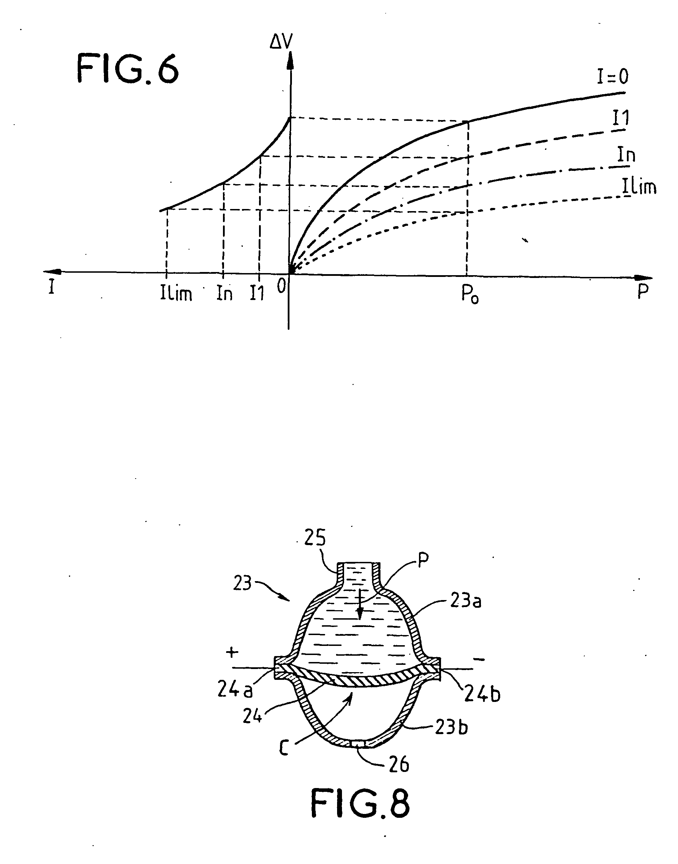

Pour mieux contrôler le comportement du tuyau T et modifier le cas échéant sa loi de déformation, on prévoit sur des bords opposés, comme partiellement illustré sur Figs.4 et 5, une connexion électrique permettant de faire circuler un courant électrique dans la tresse 5.

Fig.3 montre, en coupe axiale, une extrémité d'un tronçon de tuyau T sur laquelle a été fixé un raccord hydraulique mâle 6, permettant également de réaliser une liaison électrique comme illustré sur Fig.4. Pour sa fixation mécanique à une extrémité du tuyau T, le raccord 6 comprend une tubulure interne 6a qui s'engage dans le tuyau T et un manchon 6b qui entoure le tuyau T et qui est serti sur celui-ci dans des zones annulaires 7.

Le raccord 6 comporte, comme visible sur Fig.4, une extension prismatique 8 dans une direction perpendiculaire au plan de coupe de Fig.3. Un logement 9 est prévu dans cette extension 8 et est traversé par l'extrémité du tronçon de tuyau T. Le logement 9 comporte de chaque côté une rainure 9a, 9b, orthogonale au plan de coupe de Fig.3, qui s'ouvre vers l'extérieur par une zone élargie 9c (Fig.4).

Un connecteur 10 est prévu pour s'engager dans le logement 9. Le connecteur 10 comporte une lame métallique 10a conductrice de l'électricité, notamment en cuivre ou alliage de cuivre, comportant une échancrure 11 dont la concavité est tournée vers l'intérieur du logement 9. L'échancrure 11 présente deux bords rectilignes parallèles 11a avec des arêtes tranchantes, propres à découper les couches 2 et 4 du tuyau T pour venir au contact de la tresse 5. Le fond 11b de l'échancrure a une forme semi-circulaire. L'écartement entre les bords 11a est égal au diamètre extérieur de la tresse 5 en matière à mémoire de forme diminué d'une valeur telle qu'un contact satisfaisant soit établi entre les bords 11 a et la tresse 5. L'extrémité supérieure de la lame 10a est encastrée dans un socle 10b en matière isolante, notamment en matière plastique de forme sensiblement parallélépipédique et présentant, à chaque extrémité longitudinale, un bossage 10c propre à se loger dans la zone élargie 9c des rainures 9a, 9b.

Un câble électrique 10d dont l'âme conductrice (non visible) est reliée électriquement à la lame 10a permet le raccordement à une source d'énergie électrique. Une échancrure 8a est prévue dans l'extension 8 pour le passage du câble 10d.

L'autre extrémité (non représentée) du tronçon de tuyau T est équipée de la même manière d'un raccord mécanique et électrique semblable au raccord 6.

Il est ainsi possible de faire circuler un courant électrique dans la tresse 5 d'une extrémité du tronçon à l'autre en reliant les câbles 10d desdites extrémités aux deux bornes d'une source d'énergie électrique.

En faisant varier l'intensité du courant circulant dans la tresse 5 il est possible de modifier la loi de déformation du diamètre du tuyau T en fonction de la pression, et de modifier la perte de charge dans le tuyau.

L'invention permet de modifier le volume du tuyau souple T, et son impédance apparente. Il devient possible d'assurer une adaptation de l'absorption ou de l'impédance d'un circuit hydraulique comportant des tuyaux selon l'invention.

On peut estimer la pression dans le tuyau T par mesure de la résistance électrique de la tresse 5 ou de l'intensité du courant traversant cette tresse sous une tension déterminée. En effet, l'allongement des fils composant la tresse 5, sous l'effet de la pression interne dans le tuyau, entraîne une variation de la résistance de ces fils et donc du courant qui les traverse, à tension constante. Il est donc possible de suivre les variations de pression dans le tuyau et d'estimer la valeur instantanée de la pression à partir d'une valeur initiale connue.

Fig.6 est un diagramme illustrant dans le quadrant droit la variation ΔV du volume intérieur d'un contenant, par exemple un tronçon de tuyau, limité par une paroi C selon l'invention, en fonction de la pression P du fluide (portée en abscisse), notamment du liquide, remplissant le contenant. Les courbes I=0, I1, In, Ilim (= I limite) illustrent ces variations pour diverses valeurs d'intensité du courant électrique circulant dans la tresse 5.

I=0 correspond à une intensité nulle, et la courbe en trait plein représente la déformation naturelle du tuyau.

Ilim correspond à la valeur maximale admissible du courant électrique dans la tresse 5. La courbe correspondante fait apparaître les plus faibles variations de volume en fonction de la pression.

I1, In sont des valeurs d'intensité supérieures à 0.

Pour une valeur Pₒ de la pression, la variation de volume du contenant diminue lorsque l'intensité qui traverse la tresse 5 passe de la valeur nulle à la valeur Ilim.

Le quadrant gauche de Fig.6 donne les variations ΔV du volume portées en ordonnée en fonction de l'intensité du courant traversant la tresse 5, portée en abscisse. On retrouve les valeurs I=0, I1, In, I lim.

Fig.7 illustre schématiquement l'utilisation d'un tuyau selon l'invention dans un distributeur 12 de gouttes calibrées. Le distributeur 12 comporte, en partie haute, un réservoir 13 de liquide sous pression, par exemple sous pression d'air comprimé admis par une canalisation 14 débouchant dans le couvercle fermant le réservoir 13. Une canalisation 15 part du fond du réservoir pour conduire le liquide dans un volume fermé 16 dont la paroi cylindrique est constituée par un tronçon de tuyau T selon l'invention. Un couvercle 17 et un fond 18 schématiquement représentés ferment les extrémités du volume 16. Une électrovanne 19, avec sa commande électrique, est montée sur la canalisation 15 qui débouche à travers le couvercle 17. Une tubulure 20 part du fond 18 jusqu'à une buse 21.

Les extrémités axiales de la tresse 5 en matériau à mémoire de forme du tuyau T sont reliées électriquement à une borne + et à une borne - d'une source de tension électrique.

Lorsque le volume 16 a été rempli de liquide par ouverture de l'électrovanne 19, on fait circuler un courant électrique dans la tresse 5 du tuyau T provoquant son échauffement. Le tuyau T subit une contraction qui dépend de l'intensité du courant. Le volume des gouttes 22 délivrées par la buse 21 dépend surtout de la rigidité du tuyau T et donc de l'intensité du courant traversant la tresse 5, et ne dépend pratiquement pas de la viscosité du liquide à distribuer.

Fig.8 illustre une utilisation d'une paroi C selon l'invention pour un accumulateur hydraulique 23, par exemple de forme sensiblement sphérique, obtenu par assemblage de deux coupelles 23a, 23b suivant un plan équatorial. Une cloison de séparation 24 découpée dans un morceau de paroi C est serrée de manière étanche suivant le plan équatorial de jonction des deux coupelles. Le liquide sous pression est admis par une tubulure 25 débouchant au sommet de coupelle supérieure. Des bords opposés 24a, 24b, de la paroi 24 sont reliés à deux bornes d'une source d'énergie électrique. En faisant varier l'intensité du courant traversant la tresse en matériau à mémoire de forme de la paroi 24, on peut moduler la pression du liquide dans l'accumulateur.

La variation de volume dans l'accumulateur peut être ainsi assurée par la paroi 24, sans faire appel à un volume de gaz compressible qui serait enfermé dans la coupelle 23b , du côté de la paroi opposé au liquide. Le volume intérieur de la coupelle 23b communique avec l'atmosphère par un orifice 26.

En dehors des applications déjà évoquées, l'invention permet une régulation de la pression dans les systèmes de freinage hydrauliques, et offre la possibilité de modifier les paramètres de résonance (réflexion d'onde) dans une ligne de conduite hydraulique, comme le ferait un " tuner "hydraulique.

## Revendications

1. Paroi flexible pour contenir un fluide sous pression dans un volume, cette paroi comprenant au moins une couche intermédiaire (3,4) pour assurer une résistance mécanique, et deux couches d'étanchéité (1,2) situées de part et d'autre de la couche intermédiaire, **caractérisée par le fait qu'**elle comporte une nappe intermédiaire (5) de fils en matière à mémoire de forme disposés et orientés de manière que leur contraction, lorsque la température s'élève, s'oppose à la déformation mécanique de la paroi sous l'effet d'une pression.

2. Paroi selon la revendication 1, **caractérisée par le fait que** la nappe intermédiaire de fils en matière à mémoire de forme est constituée par une tresse (5).

3. Paroi selon la revendication 2, **caractérisée par le fait que** des raccords électriques (6,10) sont prévus sur des bords opposés de la tresse (5) pour permettre d'y faire circuler un courant électrique.

4. Tuyau flexible , en particulier pour circuit hydraulique, ayant une paroi selon l'une des revendications 1 à 3.

5. Tuyau selon la revendication 4, **caractérisé par le fait que** la nappe intermédiaire (5) de fils en matière à mémoire de forme comporte des fils inclinés par rapport aux génératrices du tuyau afin de présenter une composante suivant la direction circonférentielle.

6. Tuyau selon la revendication 5, **caractérisé par le fait que** la nappe intermédiaire de fils en matière à mémoire de forme est constituée par une tresse (5).

7. Tuyau selon la revendication 6, **caractérisé par le fait qu'** il comporte une couche externe (2) et une couche interne (1) en matière élastomère, notamment en caoutchouc, assurant l'étanchéité.

8. Tuyau selon la revendication 6, **caractérisé par le fait que** la tresse (5) de fils en matière à mémoire de forme est comprise entre deux couches (3,4) assurant une résistance mécanique, en particulier formées par des tresses en fil de Nylon

9. Tuyau selon l'une des revendications 6 à 8 , **caractérisé par le fait qu'**il est muni à chaque extrémité d'un raccord hydraulique et électrique (6, 10) en liaison électrique avec l'extrémité correspondante de la tresse (5) en matériau à mémoire de forme.

10. Tuyau selon la revendication 9 , **caractérisé par** le fait le raccord hydraulique et électrique (6, 10) comporte une extension prismatique (8) dans laquelle est prévu un logement (9) traversé par l'extrémité du tuyau (T), et un connecteur (10) prévu pour s'engager dans le logement (9), ce connecteur comportant une lame métallique (10a) présentant une échancrure (11) avec des bords à arêtes tranchantes, propres à découper des couches (2 , 4) du tuyau (T) pour venir au contact de la tresse (5).

11. Tuyau selon la revendication 9 ou 10, **caractérisé par le fait qu'**il est relié à chaque extrémité à une borne d'une source d'énergie électrique et que l'intensité du courant électrique traversant la tresse à mémoire de forme est réglée et contrôlée selon la loi d'absorption souhaitée pour le tuyau.

12. Utilisation d'un tuyau selon l'une des revendications 4 à 11, dans un système de freinage pour véhicule automobile.

13. Utilisation d'un tuyau selon l'une des revendications 4 à 11 dans un distributeur de gouttes calibrées, **caractérisée par le fait que** le distributeur (12) comporte, en partie haute, un réservoir (13) de liquide sous pression, qu'une canalisation (15) part du fond du réservoir pour conduire le liquide dans un volume fermé (16) dont la paroi cylindrique est constituée par un tronçon du tuyau (T) , un couvercle (17) et un fond (18) fermant les extrémités du volume (16), une électrovanne (19) étant montée sur la canalisation (15) qui débouche à travers le couvercle (17) et une tubulure (20) partant du fond (18) jusqu'à une buse (21), les extrémités axiales de la tresse en matériau à mémoire de forme du tuyau (T) étant reliées électriquement aux bornes d'une source d'énergie électrique.

14. Utilisation d'une paroi flexible selon l'une des revendications 1 à 3 dans un accumulateur hydraulique, **caractérisée par le fait que** l'accumulateur hydraulique (23) est délimité par une paroi flexible (24) et que des bords opposés (24a, 24b) de la nappe de fils en matière à mémoire de forme de cette paroi sont reliés aux bornes d'une source d'énergie électrique.

## Claims

1. Flexible wall for containing a pressurized fluid in a volume, this wall comprising at least one interlayer (3, 4), to ensure mechanical strength, and two sealing layers (1, 2) lying one on each side of the interlayer, **characterized in that** it includes an intermediate ply (5) of wires made of a shape-memory material that are arranged and oriented so that their contraction, when the temperature rises, opposes the mechanical deformation of the wall under the effect of pressure.

2. Wall according to Claim 1, **characterized in that** the intermediate ply of wires made of a shape-memory material consists of a braid (5).

3. Wall according to Claim 2, **characterized in that** electrical couplers (6, 10) are provided on opposed edges of the braid (5) in order to allow an electrical current to flow therein.

4. Hose, in particular for a hydraulic circuit, having a wall according to one of Claims 1 to 3.

5. Hose according to Claim 4, **characterized in that** the intermediate ply (5) of wires made of a shape-memory material comprises wires that are inclined with respect to the generatrices of the hose so as to have a component in the hoop direction.

6. Hose according to Claim 5, **characterized in that** the intermediate ply of wires made of a shape-memory material consists of a braid (5).

7. Hose according to Claim 6, **characterized in that** it includes an external layer (2) and an internal layer
(1) made of an elastomer, especially a rubber, to ensure sealing.

8. Hose according to Claim 6, **characterized in that** the braid (5) of wires made of a shape-memory material is between two layers (3, 4) ensuring mechanical strength, these being formed in particular by braids made of nylon yarn.

9. Hose according to one of Claims 6 to 8, **characterized in that** it is provided at each end with a hydraulic and electrical coupler (6, 10) electrically connected with the corresponding end of the braid (5) made of a shape-memory material.

10. Hose according to Claim 9, **characterized in that** the hydraulic and electrical coupler (6, 10) includes a prismatic extension (8) in which a housing (9) is provided, the end of the hose (T) passing through the said housing, and a connector (10) designed to fit into the housing (9), this connector comprising a metal blade (10a) having a recess (11) with flanks having cutting edges suitable for cutting layers (2, 4) of the hose (T) in order to come into contact with the braid (5).

11. Hose according to Claim 9 or 10, **characterized in that** it is connected at each end to a terminal of an electrical power supply and **in that** the intensity of the electrical current flowing through the shape-memory braid is adjusted and controlled according to the absorption law desired for the hose.

12. Use of a hose according to one of Claims 4 to 11, in a motor-vehicle braking system.

13. Use of a hose according to one of Claims 4 to 11 in a calibrated-drop delivery system, **characterized in that** the delivery system (12) comprises, at the top, a reservoir (13) of pressurized liquid, **in that** a line (15) leaves the bottom of the reservoir in order to conduct the liquid into a closed volume (16), the cylindrical wall of which consists of a length of hose (T), a cover (17) and a bottom (18) closing off the ends of the volume (16), a solenoid valve (19) being mounted on the line (15) which runs through the cover (17) and a tubing (20) going from the bottom (18) as far as a nozzle (21), the axial ends of the braid made of a shape-memory material of the hose (T) being electrically connected to the terminals of an electrical power supply.

14. Use of a flexible wall according to one of Claims 1 to 3 in a hydraulic accumulator, **characterized in that** the hydraulic accumulator (23) is bounded by a flexible wall (24) and **in that** opposed edges (24a, 24b) of the ply of wires made of a shape-memory material of this wall are connected to the terminals of an electrical power supply.

## Patentansprüche

1. Flexible Wand, um ein unter Druck stehendes Fluid in einem Volumen zu enthalten, wobei diese Wand mindestens eine Zwischenschicht (3, 4) aufweist, um , eine mechanische Festigkeit zu gewährleisten, sowie zwei Dichtungsschichten (1, 2), die auf der einen und auf der anderen Seite der Zwischenschicht angeordnet sind, **dadurch gekennzeichnet, dass** sie eine Zwischenlage (5) aus Fäden aus Formgedächtnismaterial aufweist, die so angeordnet und ausgerichtet sind, dass ihre Kontraktion, wenn die Temperatur steigt, der mechanischen Verformung der Wand unter der Wirkung eines Druck entgegenwirkt.

2. Wand nach Anspruch 1, **dadurch gekennzeichnet, dass** die Zwischenlage aus Fäden aus Formgedächtnismaterial durch ein Geflecht (5) gebildet ist.

3. Wand nach Anspruch 2, **dadurch gekennzeichnet, dass** elektrische Anschlüsse (6, 10) an gegenüberliegenden Rändern des Geflechts (5) vorgesehen sind, um einen elektrischen Strom an diesen zirkulieren zu lassen.

4. Schlauch, insbesondere für einen Hydraulikkreis, mit einer Wand nach einem der Ansprüche 1 bis 3.

5. Schlauch nach Anspruch 4, **dadurch gekennzeichnet, dass** die Zwischenlage (5) aus Fäden aus Formgedächtnismaterial Fäden aufweist, die bezüglich den Mantellinien des Schlauchs geneigt sind, um eine Komponente entlang der Umfangsrichtung zu bilden.

6. Schlauch nach Anspruch 5, **dadurch gekennzeichnet, dass** die Zwischenlage aus Fäden aus Formgedächtnismaterial durch ein Geflecht (5) gebildet ist.

7. Schlauch nach Anspruch 6, **dadurch gekennzeichnet, dass** er eine Außenschicht (2) und eine Innenschicht (1) aus Elastomermaterial, insbesondere aus Kautschuk aufweist, die die Dichtigkeit gewährleisten.

8. Schlauch nach Anspruch 6, **dadurch gekennzeichnet, dass** das Geflecht (5) aus Fäden aus Formgedächtnismaterial zwischen zwei Schichten (3, 4) angeordnet ist, die eine mechanische Festigkeit gewährleisten und insbesondere aus Geflechten aus Nylonfäden gebildet sind.

9. Schlauch nach einem der Ansprüche 6 bis 8, **dadurch gekennzeichnet, dass** er an jedem Ende mit einem hydraulischen und einem elektrischen Anschluss (6, 10) versehen ist, die mit dem entsprechenden Ende des Geflechts (5) aus Formgedächtnismaterial elektrisch verbunden sind.

10. Schlauch nach Anspruch 9, **dadurch gekennzeichnet, dass** der hydraulische und der elektrische Anschluss (6, 10) eine prismatische Verlängerung (8) aufweisen, in der eine Aufnahme (9), die von dem Ende des Schlauchs (T) durchquert ist, vorgesehen ist, und einen Stecker (10), der dazu vorgesehen ist, in der Aufnahme (9) in Eingriff zu gelangen, wobei dieser Stecker eine Metallzunge (10a) aufweist, die eine Aussparung (11) mit scharfkantigen Rändern aufweist, welche Schichten (2, 4) des Schlauchs (T) schneiden können, um mit dem Geflecht (5) in Kontakt zu gelangen.

11. Schlauch nach Anspruch 9 oder 10, **dadurch gekennzeichnet, dass** er an jedem Ende mit einer Klemme einer Quelle elektrischer Energie verbunden ist und dass die Stärke des durch das Geflecht mit Formgedächtnis fließenden elektrischen Stroms gemäß dem für den Schlauch gewünschten Absorptionsgesetz eingestellt und gesteuert wird.

12. Verwendung eines Schlauchs nach einem der Ansprüche 4 bis 11 in einem Kraftfahrzeugbremssystem.

13. Verwendung eines Schlauchs nach einem der Ansprüche 4 bis 11 in einem Verteiler von kalibrierten Tropfen, **dadurch gekennzeichnet, dass** der Verteiler (12) im oberen Bereich einen Behälter (13) für unter Druck stehende Flüssigkeit aufweist, dass eine Leitung (15) sich ausgehend vom Boden des Behälters erstreckt, um die Flüssigkeit in ein geschlossenes Volumen (16) zu leiten, dessen zylindrische Wand durch einen Abschnitt des Schlauchs (T) gebildet ist, wobei ein Deckel (17) und ein Boden (18) die Enden des Volumens (16) verschließen, ein Magnetventil (19) an der Leitung (15) angebracht ist, welche durch den Deckel (17) mündet, und ein Rohr (20) sich ausgehend vom Boden (18) bis zu einer Düse (21) erstreckt, wobei die axialen Enden des Geflechts aus Formgedächtnismaterial des Schlauchs (T) mit den Klemmen einer Quelle elektrischer Energie elektrisch verbunden sind.

14. Verwendung einer flexiblen Wand nach einem der Ansprüche 1 bis 3 in einem Hydraulikspeicher, **dadurch gekennzeichnet, dass** der Hydraulikspeicher (23) durch eine flexible Wand (24) begrenzt ist und dass die gegenüberliegenden Ränder (24a, 24b) der Lage aus Fäden aus Formgedächtnismaterial dieser Wand mit den Klemmen einer Quelle elektrischer Energie verbunden sind.
